# EUROPEAN PATENT APPLICATION

(11) **EP 4 525 065 A1**
(43) Date of publication of application: **19.03.2025**
(21) Application number: 24200099.0
(22) Date of filing: 12.09.2024
(51) Int. Cl.: H01M 4/04, H01M 4/131, H01M 4/1391, H01M 4/525, H01M 4/62, H01M 10/052, H01M 4/02

(54) **SOLVENT-FREE CATHODE COMPOSITION**

(30) Priority: 15.09.2023 SE 2351077
(71) Applicant: Northvolt AB, 112 47 Stockholm (SE)
(72) Inventor: Mangesh Korde, Prasad, 169 40 Solna (SE)
(74) Representative: Engman, Eva Jessica

(57) **Abstract**

The present disclosure relates to a solvent-free composition, electrodes formed from said composition, cells formed from said electrode, battery systems including said cell and vehicles containing said battery system. The present disclosure also relates to methods of preparing said composition and electrode. The composition contains cathode active material, lithiated polymer, nitrile rubber and optional conductive additive. The electrodes formed using the composition show excellent electrochemical performance and stability including long cycle life, high capacity retention, good flexibility and good adhesion.

## Description

### Technical Field

The present disclosure relates to a method of forming a cathode comprising an electroactive layer and a current collector, and to a solvent-free composition for use in the method, and from which the electroactive layer is formed. The present invention is also related to a cell including the cathode, a battery system including the cell and a vehicle including the battery system.

### Background

There has been significant interest in the use of rechargeable batteries for use in energy storage applications. In particular, lithium-ion batteries have been widely applied in diverse industries, such as electronic devices, power tools, satellites, utility-scale storage and electric vehicles.

Commercial lithium-ion battery electrodes are typically manufactured using wet processing techniques by coating a slurry onto a conductive foil. This process involves using significant amounts of solvent, such as N-methyl-2-pyrrolidone (NMP) or water. After casting the slurry onto the conductive foil, the electrode must be dried by evaporating the solvent. The drying process may take from several hours to days and is normally carried out at elevated temperatures to completely dry the electrode. Evaporated NMP also is generally recovered due to its high cost and potential as an environmental pollutant. Furthermore, the drying process may impart microstructural defects on the electrode surface as the solvent evaporates. As a result, the use of solvents and the required drying system contribute to significant production costs for lithium-ion battery electrodes.

The elimination of solvents from the manufacture of lithium-ion battery electrodes is therefore an attractive approach to reduce production costs and processing times and improve electrode properties. The development of electrode manufacturing methods using dry processing conditions by coating conductive foils with dry particles represents an ideal fabrication process. Furthermore, this may result in electrodes and batteries with superior mechanical and electrochemical properties, such as improved electrode adhesion strength, battery stability, cycle life and capacity retention.

This disclosure relates to a novel method of forming an electrode, wherein the method is solvent-free. The authors have discovered that this method leads to lithium-ion batteries with unexpectedly improved mechanical and electrochemical performance and stability.

### Summary

According to an aspect of the present disclosure, there is provided a method of forming a cathode, the cathode comprising a conductive foil and an electroactive layer, the method comprising:
a. providing a solvent-free composition comprising
   a cathode active material;
   a lithiated polymer;
   a nitrile rubber; and
   optionally a conductive additive; and
b. depositing the solvent-free composition on the conductive foil to form an electroactive layer.

According to a further aspect of the present disclosure, there is provided a cathode formed via a solvent-free method.

According to a further aspect of the present disclosure, there is provided a solvent-free composition comprising;
92-99 wt% cathode active material;
0.01-3 wt% lithiated polymer;
0.05-7 wt% nitrile rubber; and
optionally 0.05-5 wt% conductive additive;
wherein,
the D[4,3] particle sizes for the cathode active material and the lithiated polymer are from 5:1 to 1:5, preferably from 3:1 to 1:3, more preferably from 2:1 to 1:2.

According to a further aspect of the present disclosure, there is provided a method for preparing a solvent-free composition comprising the steps of:
a. providing a combination of a cathode active material, a lithiated polymer, a nitrile rubber, and optionally a conductive additive; and
b. mixing the combination under a shear force to obtain the solvent-free composition.

The present invention will in the following be described in more detail.

### Detailed Description

Unless otherwise indicated, all technical and scientific terms used herein have the same meaning as commonly understood by one of ordinary skill in the art to which this invention pertains.

An advantage of the method of the present disclosure is that it is solvent-free.

The method of the disclosure comprises a first step of preparing a solvent-free composition, the solvent-free composition comprising:
a cathode active material;
a lithiated polymer;
a nitrile rubber; and
optionally a conductive additive.

In some embodiments, the solvent-free composition comprises about 92 to about 99 wt% of a cathode active material, about 0.05 to about 7 wt% of a nitrile rubber, about 0.01 to about 3 wt% of a lithiated polymer, and optionally about 0.05 to about 5 wt% of a conductive additive, based on the total weight of the composition.

In another embodiment, the solvent-free composition comprises about 94 to 99 wt% of a cathode active material, about 0.1 to 6 wt% of a nitrile rubber, about 0.1 to 2 wt% of a lithiated polymer, and optionally about 0.1 to 4 wt% of a conductive additive, based on the total weight of the composition.

In a preferred embodiment, the solvent-free composition comprises about 95 to 98 wt% of a cathode active material, about 1 to 5 wt% of a nitrile rubber, about 0.25 to 0.75 wt% of a lithiated polymer, and optionally about 0.5 to 2 wt% of a conductive additive, based on the total weight of the composition.

For the avoidance of doubt, a 'solvent-free composition' or a composition 'free from solvent' is the be understood as a composition that it substantially free from solvent.

In the context of the disclosure, a solvent-free composition refers to a composition that comprises less than about 5 wt% solvent, for example less than about 4 wt% solvent, such as less than about 3 wt% solvent, for example less than about 2 wt% solvent, such as less than about 1 wt% solvent, for example less than about 0.5 wt% solvent, such as less about than 0.1 wt% solvent, based on the total weight of the composition.

In the context of the disclosure, a solvent is a liquid component. For example, a solvent may be an organic solvent, inorganic solvent, and/or aqueous solvent.

In some embodiments, a solvent is a volatile compound, wherein volatile may be defined as a compound having a high vapour pressure at room temperature, such as a compound that has a boiling point between about 50 °C and about 250 °C.

In one embodiment, the composition is free from volatile organic compounds (VOCs), where VOCs are organic compounds that have high vapour pressure at room temperature, such as organic compounds that have boiling points between about 50 °C and about 250 °C.

A major advantage of using a solvent-free composition in the formation of an electroactive layer is that the composition may comprise a higher cathode active material wt% than typically possible in processes comprising a solvent. This may improve the energy capacity and energy density of an electroactive layer/cathode prepared from the solvent-free composition. The solvent-free composition is then deposited on a conductive foil to form a solvent-free composition.

In addition, solvent-free methods are typically greener by eliminating the need for toxic solvents that are associated with both health and environmental risks.

The properties of each of the components of the solvent-free composition are beneficial for providing a solvent-free composition that is homogeneously mixed, facilitate the formation of an electroactive layer via a solvent-free deposition method, and provide an electrode with improved properties.

### Cathode active material

The solvent-free composition of the disclosure comprises a cathode active material wherein the cathode active material may comprise a suitable material for use as an electrochemically active material in the cathode of a cell, particularly a lithium-ion cell.

The term "electrochemically active material" is to be understood as an electrochemical species which can be oxidised and reduced in a system which enables a cell to produce electric energy during discharge. The role of the cathode active material is to reversibly intercalate (or otherwise bind) ions (such as lithium ions) during cell charge and discharge cycles.

The cathode active material may comprise an intercalation material, such as a lithium intercalation material, for example a lithium metal oxide which may include lithium and a transition metal.

The cathode active material may comprise any one or a mixture of two or more of lithium manganese oxide, lithium nickel oxide, lithium cobalt oxide, lithium nickel manganese oxide (LNMO), lithium nickel cobalt oxide, lithium nickel manganese cobalt (NMC) oxide, lithium iron phosphate (LFP), lithium iron manganese phosphate (LFMP) and lithium nickel cobalt aluminium oxide (NCA).

Preferably, the cathode active material is a LNMO or an NMC material, i.e., a lithium nickel manganese oxide or a lithium nickel manganese cobalt oxide.

The cathode active material may comprise a lithium metal oxide material that is coated with another material. For example, a lithium metal oxide may be coated with a different lithium metal oxide, carbon, graphene, or a combination thereof. Furthermore, the coating material may have been coated using atomic layer deposition (ALD) as a non-limiting example.

The cathode active material may be present in the composition in an amount of from about 92 to about 99 wt%, for example from about 94 to about 99 wt%, such as from about 95 wt% to about 98 wt%, for example from about 96 to about 98 wt%, based on the total weight of the composition.

### Lithiated polymer

The solvent-free composition of the disclosure comprises a lithiated polymer.

The lithiated polymer improves the mechanical properties of the solvent-free composition e.g., by binding the components of the solvent-free composition within the active layer. The lithiated polymer may provide an enhancement of the electrochemical properties of the electroactive layer.

Without wishing to be bound by theory, it is believed that the lithiated polymer may act as an additional reservoir of lithium ions. When a cell is fabricated using an electrode prepared via the method of the disclosure, the lithiated polymer may supply extra lithium ions to the electrode. Upon initial charge and discharge cycling of the cell, the lithiated polymer facilitates the formation of a stable and protective cathode-electrolyte interphase (CEI) layer on the cathode.

Specifically, the lithiated polymer and the CEI layer may limit contact between the cathode active material and the electrolyte solution. The formation of a CEI layer prevents oxidative decomposition reactions occurring and degradation of the cathode and electrolyte species.

It is proposed that the protective CEI layer mitigates reactions between the cathode active material and solution species from the electrolyte. Furthermore, the inclusion of a lithiated polymer may provide extra lithium ions that can compensate for the loss of active lithium ions from the cathode active material during cell cycling.

In addition, the lithiated polymer may have a high ionic conductivity, which facilitates transport of lithium-ions through the composition. As a result, the impedance of the electrode remains low, and the rate capacity of the cell is retained during its use.

Without wishing to be bound by theory, the relative size and ratio of the cathode active material to lithiated polymer are considered to produce an electroactive material with improved properties. For example, due to the cathode active material and the lithiated polymer being similar in size, the cathode active materials do not become not coated with lithiated polymer during formation of the solvent-free composition and/or the electroactive layer. Preferably, the lithiated polymer and/or the cathode active material particles remain discrete particles within the electroactive layer, wherein the lithiated polymer serves to bind the overall composition together.

This allows for lithium ions to intercalate into and out of the cathode active material without hindrance. This results in reduced ionic resistance of the composition when in a cell, and enabling a faster potential charging rate of the cell.

In contrast, wet processing methods may result in the lithiated polymer coating the cathode active material, increasing the ionic resistance.

Accordingly, the method of the disclosure may provide an improve electroactive layer than methods comprising wet mixing and/or deposition steps.

In addition to binding the cathode active material particles, the lithiated polymer may also improve the coating ability of the solvent-free composition on the current collector.

In an embodiment, the cathode active material has a similar particle size as the lithiated polymer.

By "similar particle size" is meant that the D[4,3] particle sizes for the two components range from 5:1 to 1:5, preferably from 3:1 to 1:3, more preferably from 2:1 to 1:2.

The particle size may be measured, for instance, using a Mastersizer 3000 from Malvern Panalytical Ltd.

D[4,3] particle size may be understood as the volume-weighted mean particle size, i.e. the average diameter of spherical particles of an equivalent volume to the particles which are being measured.

The solvent-free mixing process may result in the lithiated polymer remaining as discrete particles and not completely coating the cathode active particles in the same way that may occur when a wet mixing process would be used. This leaves the surface of the cathode active material particles free for intercalation/deintercalation of lithium.

Accordingly, providing a cathode active material and lithiated polymer of similar size facilitates homogeneous mixing of the two components, which may result in an improved electrochemical performance of the electroactive layer.

In the context of the disclosure, a lithiated polymer is a polymer containing lithium ions.

The lithiated polymer is a lithium salt and comprises a negatively charged polymer that is electrically balanced with positively charged lithium counter-ions.

In some embodiments, the lithiated polymer comprises carboxyl functional groups on the polymer. For example, the lithiated polymer may be a lithium salt of a polymer or copolymer comprising monomer units based on ethylenically unsaturated carboxylic acid derivatives.

The lithiated polymer may be a lithiated polysaccharide, for example lithium alginate.

The lithiated polymer may be a lithiated and sulfonated poly(ether ether ketone), i.e. a sulfonated poly(ether ether ketone) that has undergone lithiation or partial lithiation.

In another embodiment, the lithiated polymer is a lithium salt of a polymer or copolymer comprising monomer units selected from one or more of the following ethylenically unsaturated C₃-C₆ monocarboxylic acids, ethylenically unsaturated C₄-C₆ dicarboxylic acids, and mixtures thereof.

Preferably, the lithiated polymer is a lithium salt of a polymer or copolymer comprising monomer units selected from one or more of the following acrylic acid, methacrylic acid, crotonic acid, isocrotonic acid, 2-ethylpropenoic acid, maleic acid, itaconic acid, fumaric acid, citraconic acid, and mixtures thereof.

In other words, the lithiated polymer is preferably selected from lithium polyacrylate, lithium polymethacrylate, lithium polycrotonate, lithium polyisocrotonate, lithium poly-2-ethylpropenate, lithium polymaleate, lithium polyitaconate, lithium polyfumate, or lithium polycitraconate.

More preferably, the lithiated polymer is a lithium salt of polyacrylic acid, i.e. the lithiated polymer is lithium polyacrylate (LiPAA).

Typical average molecular weights (Mₙ) of the lithiated polymer are from about 10,000 to about 500,000 g/mol, for example from about 15,000 to about 300,000 g/mol, preferably from about 20,000 to about 170,000 g/mol.

The lithiated polymer is present as a lithium salt. Preferably, the lithiated polymer is a fully-lithiated polymer, so that the carboxyl groups in the lithiated polymer are preferably all in salt form, i.e. the lithiated polymer preferably does not contain any free carboxylic acid groups.

Lithium polyacrylate is also preferable to use since it is relatively inexpensive.

The lithiated polymer may be present in the solvent-free composition an amount of from about 0.01 to about 3 wt%, such as from about 0.1 to about 2 wt%, for example from about 0.2 to about 1.5 wt%, preferably from about 0.25 to about 0.75 wt%, based on the total weight of the composition.

### Nitrile rubber

The solvent-free composition of the disclosure comprises a nitrile rubber. The nitrile rubber acts as a solid lubricant during solvent-free preparation of the electrode.

Without wishing to be bound by theory, it is through that the nitrile rubber acts as a solid lubricant during both mixing and deposition of the solvent-free composition to form an active layer.

It is preferable that the nitrile rubber has a low glass transition temperature, and ideally a low softening point and low melting point. Inclusion of a nitrile rubber with these properties facilities dry mixing of the solvent-free composition and allows for solvent-free deposition of the composition to form an electroactive layer on a conductive foil.

In both processes, the nitrile rubber may act as a solid lubricant when heating above the softening point. The softening point is the temperature at which a material softens. The nitrile rubber may also have a low softening point and/or melting point in order to facilitate processing of the solvent-free composition.

The nitrile rubber having a softening point and/or melting point as defined herein makes the composition particularly suitable for dry mixing, extrusion and calendering.

The softening point may be determined by the Vicat method (ASTM D1525-09). The softening point is measured as the temperature at which a polymer (in this case, nitrile rubber) is penetrated to a depth of 1 mm by a flat-ended needle with a 1 sq mm circular or square cross-section under a load of 9.81 N.

The nitrile rubber, particularly HNBR, may have a softening point of about 30°C or more, such as about 50°C or more, for example from about 50°C to about 130°C, preferably from about 55°C to about 100°C, more preferably from about 60°C to about 75°C.

Accordingly, preparation of the solvent-free composition is preferably carried out at a temperature above the softening point of the nitrile rubber. Softening may be achieved by direct heating of the composition, or softening may be achieved by the generation of heat during mixing.

In one embodiment, the solvent-free composition is obtained by:
a. providing a combination of a cathode active material, a lithiated polymer, nitrile rubber and a conductive additive; and
b. mixing the combination under a shear force to obtain the solvent-free composition.

Step a. of the method comprises providing a composition of cathode active material, nitrile rubber and lithiated polymer. These ingredients may be combined in any order.

The ingredients may be supplied as a solution or a dispersion, and therefore solvent or dispersing medium may be added to prepare the composition and/or electrode. For example, the lithiated polymer, in particular LiPAA, may be provided as an emulsion, such as a LiPAA emulsion.

Typically, step a. comprises a providing the components in a mixer, wherein the mixer is selected from the group consisting of a high shear mixer, high shear reactor, rotor-stator mixer, and a high-shear homogenizer.

Step b. of the method involves mixing the combination under a shear force. The shear force applied during mixing is preferable sufficient to generate enough heat to soften the nitrile rubber.

Typically, step b. comprises:
mixing the composition for about 5 minutes to about 5 hours, such as for about 20 minutes to about 4 hours, for example for about 40 minutes to about 3 hours, such as for about 1 to about 2 hours.

Typically, step b. comprises:
mixing the composition in a shear mixer, wherein the rotor tip speed of the shear mixer is from about 10 to about 50 m/s.

Typically, step b. comprises:
mixing the composition in a shear mixer, wherein the shear rate is from about 20,000 to about 100,000 s⁻¹.

Typically, step b. comprises:
mixing the composition at a temperature of from about 20 to about 300 °C, such as from about 50 to about 250 °C, for example from about 80 to about 200 °C, such as from about 120 to about 200 °C, such as from about 150 to about 200 °C.

Preferably, mixing at a temperature of from about 50 to about 250 °C. More preferably, mixing at a temperature of from about 80 to about 200 °C. Even more preferably, mixing at a temperature of from about 90 to about 200 °C.

Step b. is typically done at a rate which ensures even and thorough mixing of the composition, thereby resulting in a homogeneous distribution of ingredients throughout the composition.

Preferably, mixing the composition results in a homogeneous mixture. The mixing process is important since it may be advantageous to obtain an even distribution of the components of the composition throughout the mixture.

The nitrile rubber may improve the fluidity of the mixture during preparation of the composition. The improved fluidity of the mixture, as a consequence of the nitrile rubber's low softening and/or melting point, may provide for the composition to be homogeneously mixed. If a nitrile rubber is not used, then agglomeration of the components in the form of particles tends to occur, resulting in an inhomogeneous mixture. This inhomogeneity may result in an electrode with inferior properties, and lead to difficulties when preparing the electrode (i.e. the agglomerates will hinder the formation of a smooth electrode).

The nitrile rubber may also improve processing of the solvent-free composition e.g. preparation of an electroactive layer from the composition, particularly when processing is carried out at a temperature above the softening point of the nitrile rubber.

Furthermore, an electroactive layer comprising a nitrile rubber may also have superior mechanical properties and improved adhesion to the current collector. For example, the nitrile rubber may provide excellent physical strength, long-term stability, chemical resistance, heat resistance, oxidation resistance, tensile strength and abrasion resistance.

In particular, the nitrile rubber may be an elastomer. The nitrile rubber may have excellent vulcanizate properties that provides the composition, extrudate and/or cathode with excellent elasticity, tensile strength, abrasion resistance, chemical resistance, low water absorption, minimal swelling and/or high rigidity.

In one embodiment, the nitrile rubber may be a rubber which is a copolymer, terpolymer and/or quaterpolymer of at least one α,β-unsaturated nitrile, at least one conjugated diene and optionally one or more further copolymerizable monomers.

In another embodiment, the nitrile rubbers may be a hydrogenated nitrile rubber, which is a copolymer, terpolymer and/or quaterpolymer of at least one conjugated diene, at least one α,β-unsaturated nitrile monomer and optionally one or more further copolymerizable monomers, wherein at least some of C=C double bonds in the diene units are hydrogenated.

The degree of hydrogenation of the diene units may be in the range from about 50 to about 100%, such as from about 85 to about 100%, for example from about 95 to about 100%, preferably from about 97.5 to about 100%, and more preferably from about 99 to about 100%.

The degree of hydrogenation of the diene units (or butadiene groups) may be determined using IR spectroscopy.

In one embodiment, the hydrogenated nitrile rubber is fully hydrogenated. Fully hydrogenated means that the degree of hydrogenation of the diene units in the hydrogenated nitrile rubber is from about 99.1% to about 100%.

The conjugated diene may be of any type, including C₄-C₁₂ conjugated dienes, preferably C₄-C₆ conjugated dienes. Preference is given to 1,3-butadiene, isoprene, 2,3-dimethylbutadiene, 1,3-pentadiene (piperylene), 2-chloro-1,3-butadiene or a mixture thereof. Particular preference is given to 1,3-butadiene and isoprene or a mixture thereof. 1,3-butadiene is very particularly preferred.

The hydrogenated nitrile rubber may comprise a conjugated diene (whether hydrogenated or not) in a range of from about 40 to about 90% by weight, such as from about 50 to about 85% by weight, preferably from about 56% to about 85% by weight, based on the total weight of all monomer units in the hydrogenated nitrile rubber.

The α,β-unsaturated nitrile may include any known α,β-unsaturated nitrile, such as an α,β-ethylenically unsaturated nitrile. Preference is given to (C₃-C₅) α,β-ethylenically unsaturated nitriles, such as acrylonitrile, o-haloacrylonitriles such as α-chloroacrylonitrile and α-bromoacrylonitrile, α-alkylacrylonitriles such as methacrylonitrile, ethacrylonitrile or mixtures of two or more α,β-ethylenically unsaturated nitriles. Preferably, the α,β-ethylenically unsaturated nitrile is selected from one or more of acrylonitrile, methacrylonitrile, ethacrylonitrile or a mixture thereof. More preferably, the α,β-ethylenically unsaturated nitrile is acrylonitrile.

The hydrogenated nitrile rubber may comprise α,β-ethylenically unsaturated nitrile units in a range of from about 10 to about 60% by weight, such as from about 15 to about 50% by weight, preferably from about 17% to about 44% by weight, based on the total weight of all monomer units in the hydrogenated nitrile rubber.

In one embodiment, the nitrile rubber may comprise acrylonitrile units.

In some embodiments, the nitrile rubber is an elastomer copolymer comprising acrylonitrile units and other units. For example, the nitrile rubber may be a copolymer comprising acrylonitrile units, butadiene units and/or a styrene units.

In another embodiment, the butadiene units are fully or partially hydrogenated, so that the nitrile rubber may be a copolymer comprising acrylonitrile units and hydrogenated and/or partially hydrogenated butadiene units.

In other embodiments, the nitrile rubber is selected from one or more of hydrogenated nitrile rubber, nitrile butadiene rubber (NBR), nitrile butadiene latex, hydrogenated nitrile butadiene rubber (HNBR), and a mixture thereof.

Preferably, the nitrile rubber is selected from one or more of nitrile butadiene rubber (NBR), nitrile butadiene latex, hydrogenated nitrile butadiene rubber (HNBR), and a mixture thereof.

In one embodiment, the nitrile rubber is NBR, wherein NBR is a copolymer of acrylonitrile units and butadiene units.

Preferably, the nitrile rubber is HNBR, wherein HNBR is a copolymer of butadiene groups and acrylonitrile units, wherein at least some of C=C double bonds in the butadiene groups are hydrogenated..

More preferably, HNBR may be understood to mean a rubber which is a copolymer, terpolymer and/or quaterpolymer of at least an acrylonitrile unit, at least an unsaturated butadiene group and optionally one or more additional copolymerizable monomers, wherein at least some of the C=C double bonds in the butadiene groups are hydrogenated.

Preferably, the butadiene groups are 1,3-butadiene groups.

HNBR may comprise different amounts of butadiene groups and acrylonitrile units.

HNBR may comprise butadiene groups (whether hydrogenated or not) in a range of from about 40 to about 90% by weight, such as from about 50 to about 85% by weight, preferably from about 56% to about 85% by weight, based on the total weight of all monomer units in the HNBR.

In some embodiments, the degree of hydrogenation of the butadiene groups of HNBR is from about 70 to about 100% hydrogenation, such as from about 80 to about 99.5%, for example from about 85 to about 97%, such as from about 88 to about 94%.

In other embodiments, the degree of hydrogenation of the butadiene groups of HNBR may be in the range from about 50 to about 100%, for example from about 85 to about 100% such as from about 95 to about 100%, preferably from about 97.5 to about 100%, more preferably from about 99 to about 100%.

In one embodiment, HNBR is fully hydrogenated. Fully hydrogenated means that the degree of hydrogenation of the butadiene units is from about 99.1% to about 100%.

Alternatively, the HNBR may be defined in terms of the "incompleteness" of the hydrogenation process and/or the level of residual double bonds. For example, the hydrogenation process may be incomplete. Incomplete hydrogenation means that residual double bonds may be present in the HNBR. The HNBR may comprise a maximum of 10% residual double bonds, for example a maximum of 7.5%, such as a maximum of 5%, for example a maximum of 2.5%, such as a maximum of 1%.

In other embodiments, HNBR comprises from about 10 to about 60% acrylonitrile units, such as from about 19 to about 50% acrylonitrile units, for example from about 30 to about 40% acrylonitrile units, such as from about 34 to about 38%, based on the total weight of HNBR.

In one embodiment, the acrylonitrile content in HNBR may be from about 10 to about 60%, such as from about 15 to about 50%, for example from about 17% to about 50%, such as from about 17 to about 44% or from about 30% to about 45%, preferably from about 35% to about 43%, more preferably from about 37% to about 41%, based on the total weight of all monomer units in HNBR.

The glass transition temperature (T_{g}) of the nitrile rubber, in particular HNBR, may be from about -50 to about -10 °C, such as from about -40 to about -20 °C, for example -35 to about -25 °C, such as from about -33 to about -27 °C.

In some embodiments, the nitrile rubber may have a brittle point of from about -100 to about -40 °C, such as from about -80 to about -60 °C.

Brittle point may be understood as the lowest temperature at which the rubber material does not exhibit brittle failure when impacted under specified conditions.

The brittle point may be determined using a standard method, for example using ISO 812, in particular Procedure A. Test pieces are conditioned at progressively lower temperatures and subjected to impact. The lowest temperature at which no brittle failure occurs is recorded as the brittle point temperature

A nitrile rubber with a brittle point and glass transition temperature in these ranges may improve the processability of the composition. Furthermore, it may provide the cathode containing such a nitrile rubber with improved mechanical stability and durability, in particular elastomeric absorption properties, when exposed to low temperatures or subjected to stress.

A nitrile rubber with a glass transition temperature within this range may be particularly suitable for the composition, since it may provide the composition with superior mechanical properties to facilitate preparation of the composition.

The glass transition temperature may be determined using a standard method, for example by differential scanning calorimetry (DSC) and following the standard practice as defined in ASTM D6604.

For example, DSC may be carried out on a DSC Q100 Differential Scanning Calorimeter.

To avoid directly handling the samples, tweezers or other tools are used. The samples are placed into an aluminium pan and weighed to an accuracy of 0.01 milligram on an analytical balance. A lid is crimped over the material sample onto the pan. Typically, the nitrile rubber is placed directly in the weighing pan, and covered by the lid.

The differential scanning calorimeter is calibrated using an indium metal standard and a baseline correction is performed, as described in the operating manual for the differential scanning calorimeter. A material sample is placed into the test chamber of the differential scanning calorimeter for testing, and an empty pan is used as a reference. All testing is run with a 55-cubic centimeter per minute nitrogen (industrial grade) purge on the test chamber. For nitrile rubber samples, the heating and cooling program is a 2-cycle test that began with an equilibration of the chamber to -80 °C, followed by a first heating period at a heating rate of 10 °C per minute to a temperature of 100 °C, followed by equilibration of the sample at 100 °C for 3 minutes, followed by a first cooling period at a cooling rate of 10 °C per minute to a temperature of -80 °C, followed by equilibration of the sample at -80 °C for 3 minutes, and then a second heating period at a heating rate of 10 °C per minute to a temperature of 100 °C.

The results may be evaluated by identifying and quantifying the glass transition temperature of inflection, the endothermic and exothermic peaks, and the areas under the peaks on the DSC plots. The glass transition temperature is identified as the region on the plot-line where a distinct change in slope occurred. The melting point of the nitrile rubber may be determined using the capillary tube method in accordance with ASTM D-1519.

For example, the melting point may be determined using a melting point instrument, such as a Mettler Toledo Melting Point System.

The melting point instrument may be calibrated using a melting point standard and a baseline correction is performed, as described in the operating manual for the instrument. A material sample is loaded into a capillary tube (having an internal diameter of about 1 mm and a wall thickness of about 0.1 to 0.2 mm) so as to have a sample height (i.e. filling level) of about 2 to 3 mm. The instrument may be preheated to a temperature below the expected melting point of the sample, held at this temperature for about 5 minutes, and the capillary tube containing the sample inserted into the instrument. The sample may then be heated at a heating rate of about 1 °C per minute to a temperature above the melting point. The sample may be inspected through the instrument's viewfinder to determine the temperature at which the sample starts to melt (onset of melting) and the temperature at which the sample is completely melted (clear point). The measurement may be carried out at least three times to produce an accurate result. Melting point as used herein is defined as the clear point, i.e. when the sample has completely melted, based on the average of the three measurements.

The melting point of the nitrile rubber, particularly HNBR, is typically above 65°C, such as above 70°C, preferably from 70°C to 95°C, more preferably from 73°C to 87°C.

In a certain embodiment, the melting point of the nitrile rubber may be from about 80 to about 90°C.

The Mooney viscosity of the nitrile rubber, in particular HNBR, may be from about 30 to about 90, such as from about 40 to about 75, for example from about 45 to about 70, such as from about 50 to about 65.

In another embodiment, when the nitrile rubber is HNBR, it may have a Mooney viscosity of from about 20 to about 60, such as from about 30 to about 50.

"Mooney viscosity" as used herein is the Mooney viscosity of a polymer or mixture of polymers. The composition analysed for determining Mooney viscosity should be substantially devoid of solvent. For instance, the sample may be placed on a boiling-water steam table in a hood to evaporate a large fraction of the solvent and unreacted monomers, and then dried in a vacuum oven overnight (12 hours, 90°C) prior to testing, in accordance with laboratory analysis techniques, or the sample for testing may be taken from a devolatilised polymer (i.e., the polymer post-devolatilisation in industrial-scale processes).

Mooney viscosity may be measured using a Mooney viscometer, for example according to ASTM D1646-17 . First, the sample polymer is pressed between two hot plates of a compression press prior to testing. PET 36 micron may be used as the die protection. Mooney viscosity may be determined using a sample weight of 20.0 ± 3.0 g. The rest procedures before testing set forth in D1646-17 Section 8 may be 23 ± 3 °C for 30 min in air. Mooney values as reported herein were determined after resting at 23 +/-3 °C for 30 min in air. Samples are placed on either side of a rotor according to the ASTM D1646-17 test method; torque required to turn the viscometer motor at 2 rpm is measured by a transducer for determining the Mooney viscosity. The results are reported as Mooney Units (M_{L}, 1+4 @ 100 °C), where M is the Mooney viscosity number, L denotes large rotor (defined as M_{L} in ASTM D1646-17), 1 is the pre-heat time in minutes, 4 is the sample run time in minutes after the motor starts, and 100 °C is the test temperature.

The mechanical properties of the nitrile rubber, in particular HNBR, may be important to provide the composition and/or electrode with appropriate mechanical properties. For example, the hardness (Shore hardness), tensile strength, elongation and/or modulus.

In some embodiments, the nitrile rubber may have a Shore hardness of from about 20 to about 100, such as from about 50 to about 85, such as from about 67 to about 75.

The Shore hardness may be measured with a durometer, preferably a Type A durometer, to determine the resistance of the material to indentation. The Shore hardness may be determined using a standard test, such as ASTM D2240, with a 3-second delay using a Shore A scale.

In other embodiments, the nitrile rubber may have a tensile strength at break of from about 5 to about 50 MPa, such as from about 10 to about 40 MPa, for example from about 20 to about 30 MPa.

The tensile strength at break may determine the maximum stress the material can withstand while being stretched before breaking. The tensile strength at break may be determined using a standard test, such as ASTM D412-16.

In another embodiment, the nitrile rubber may have an elongation at break of from about 200 to about 700%, such as from about 300 to about 600%, for example from about 430 to about 530%.

The elongation at break may determine the percentage increase in length that the material will achieve before breaking. The elongation at break may be determined using a standard test, such as ASTM D412-16.

In one embodiment, the nitrile rubber may have a 300% modulus of from about 0.00500 to about 0.02000 GPa, such as from about 0.01000 to about 0.01500 GPa, for example from about 0.01060 to about 0.01460 GPa.

The 300% modulus may determine the relative stiffness of the material by measuring the tensile stress at an elongation of 300%. The 300% modulus may be determined using a standard test, such as ASTM D412-16.

Typical average molecular weights (M_{w}) of the nitrile rubber are from about 10,000 to about 500,000 g/mol, for example from about 15,000 to about 300,000 g/mol, preferably from about 100,000 to about 200,000 g/mol.

In another embodiment, when the nitrile rubber is HNBR, HNBR may have a weight-average molecular weight M_{w} in the range of from about 50,000 to about 500,000 g/mol. For example, the HNBR may have a M_{w} of from about 75,000 to about 250,000 g/mol, such as from about 100,000 to about 200,000 g/mol, for example from about 125,000 to about 175,000 g/mol.

The molecular weight may be a weight-average molecular weight measured by gel permeation chromatography (GPC) for polystyrene equivalents.

In certain embodiments, the nitrile rubber may have a density of from about 0.8 to about 1.1 g/cm³, such as from about 0.9 to about 1.0 g/cm³, for example from about 0.94 to about 0.98 g/cm³. The density may be determined using a standard method, for example with a pycnometer.

The nitrile rubber may further comprise an antioxidant.

HNBR is particularly suitable since it provides these properties whilst also having better chemical and thermal stability compared to NBR. HNBR can also be biodegradable and non-toxic.

The nitrile rubber may be present in the solvent-free composition in an amount of from about 0.05 wt% to about 7 wt%, for example from 0.1 wt% to about 6 wt%, such as from about 0.5 wt% to about 5.5 wt%, preferably from about 1 wt% to 5 wt%, based on the total weight of the composition.

### Conductive additive

The solvent-free composition optionally comprises a conductive additive. The conductive additive is optionally included to improve the electronic properties of the resultant electroactive layer.

In some embodiments, the conductive additive is a carbon-based material.

By carbon-based material, this is understood to be a material comprising carbon. However, the carbon-based material may also contain elements other than carbon, such as hydrogen, oxygen, nitrogen, boron, sulphur, halogens, and metals, including alkali metals, such as lithium. For example, the carbon-based material may contain elements other carbon that may be selected from one or more of hydrogen, oxygen, nitrogen, and mixtures thereof.

In one embodiment, the conductive additive is a carbon allotrope.

For example, the conductive additive may be selected from one or more of graphene, graphene fiber, fibrous graphene, porous graphene, nanoporous graphene, nanoporous graphene fiber, holey graphene, perforated graphene, graphene foam, graphene aerogel, carbon nanofiber (CNF), porous carbon nanofiber, carbon nanofoam, carbon microfoam, graphite, amorphous carbon, carbon black, acetylene black, mesocarbon microbead (MCMB), pitch-based carbon, coke powders, single-walled carbon nanotube, thin-walled carbon nanotube, multi-walled carbon nanotube, and mixtures thereof.

Preferably, the conductive additive is selected from one or more of nanoporous graphene, nanoporous graphene fiber, holey graphene, carbon nanofiber (CNF), porous carbon nanofiber, and a mixture thereof.

In some embodiments, the conductive additive may be porous. For the avoidance of doubt, 'porous' here may refer to a material containing pores and that has a porous structure.

The conductive additive may be present in the composition in an amount of from about 0.05 wt% to about 5 wt%, for example from 0.1 wt% to about 4 wt%, such as from about 0.2 wt% to about 3 wt%, preferably from about 0.5 wt% to 2 wt%, based on the total weight of the composition.

### Electrode

The method of the disclosure relates to preparing an electrode comprising an electroactive layer and a current collector.

In a preferred embodiment, the electrode of the disclosure is a cathode, and the conductive foil is a positive current collector.

The cathode conductive foil may comprise a metal, such as aluminium, nickel or stainless steel. Preferably, the positive conductive foil is an aluminium foil.

The conductive foil may have a coating such as a carbon coating, which can improve conductivity at the interface with the electrode active material. The coating may also improve the peel strength (or adhesive properties) of layers coated thereon, reducing delamination of the electrode.

The conductive foil may be a primer-coated conductive foil. Preferably, the conductive foil is coated with a primer, such as carbon and/or binder (e.g. acrylic binder). The primer-coated conductive foil may provide better adhesive properties compared to a non-coated conductive foil, and therefore better adhesion of electroactive layer and the current collector. Primer coatings may also provide enhanced electrical connection between the electroactive layer and the current collector.

In order to form the electrode, an electroactive layer is prepared by depositing the solvent-free composition on the current collector.

Accordingly, the solvent-free composition of the disclosure is formulated to be a suitable consistency for preparation of an electroactive layer. Due to the properties of the components, typically no additional binder or solvent is required for forming the electroactive layer.

Any suitable method may be used to prepare the active layer of the disclosure, for example extrusion, calendering, pressing and/or rolling.

The processing conditions employed, in particular the extruding and calendering steps, may be used to control the properties of the electroactive layer, for example the thickness, density and bonding strength. The processing conditions may therefore be varied to produce electroactive layer and/or electrode with tuned properties for different applications. For example, higher pressing forces and longer pressing times may result in thinner/denser layers, which may be optimal for certain applications and/or devices.

The processing conditions may also affect the electrochemical properties of the electrode. Therefore, the processing conditions may be varied in order to tune the electrochemical properties of the electrode and the cell, such as capacity retention, cycle life and rate capacity.

Any suitable method may be used for depositing the electroactive layer on the current collector. For example, the electroactive layer may be a free-standing layer, it may be laminated to the current collector, it may be formed directly on the current collector, or it may be fibrillated.

In an embodiment, an electrode comprising an electroactive layer and a conductive foil is prepared in a method comprising the steps of:
(i) providing the solvent-free composition according to the disclosure; and
(ii) depositing an electroactive layer on the conductive foil in a solvent-free process.

Preferably, the method is a method of forming a cathode, the cathode comprising a conductive foil and an electroactive layer, the method comprising:
(i) providing a solvent-free composition comprising
   a cathode active material;
   a lithiated polymer;
   a nitrile rubber; and
   optionally a conductive additive; and
(ii) depositing the solvent-free composition on the conductive foil to form an electroactive layer.

Steps (i) and (ii) may be carried out using standard methodologies, or by the methods described herein.

The solvent-free composition may be provided by using the method to obtain the solvent-free composition as described herein.

Preferably, step (ii) includes a step in which the temperature is above the softening temperature of the nitrile rubber, ideally above the melting point of the nitrile rubber. In this way, the fluidity of the solvent-free composition is enhanced and facilitates formation of the electroactive layer.

In some embodiments, this can be achieved by having the temperature close to or at the softening point and/or melting point of the nitrile rubber.

Step (ii) may be carried out at a temperature of about 120 °C or greater, such as about 130 °C or greater, or about 140 °C or greater, or about 150 °C or greater, such as about 160 °C or greater.

The temperature of the solvent-free composition and/or extrudate may be at a temperature of from about 20 to about 300 °C, such as from about 50 to about 250 °C, for example from about 80 to about 200 °C, such as from about 120 to about 200 °C, such as from about 150 to about 200 °C in at least one of steps (i) or (ii).

When heated above the softening point, the nitrile rubber improves the fluidity of the composition and provides lubrication. The improved fluidity of the composition allows for the solvent-free composition to be extruded and roll-to-roll pressed. If a nitrile rubber is not included in the composition, the composition tends to be a free-flowing powder which can be difficult to dry process into an electrode. Furthermore, if the nitrile rubber is not included in the composition, the composition may be tacky and difficult to roll onto the conductive foil.

In a similar manner, when the nitrile rubber is heated close to, at, or above, its melting point, it may improve the fluidity of the composition and facilitate its extrusion and/or calendering.

In an embodiment, the elevated temperature may be achieved by providing a preheated solvent-free composition or mixture, i.e. the composition or mixture is first heated and then extruded, calendered, pressed and/or rolled onto a current collector.

In an embodiment, the elevated temperature may be achieved during electroactive layer deposition. For example, methods such as extrusion, calendering and/or pressing may be used wherein heat and/or pressure are applied. As a result of heating and/or applying pressure, the temperature of the composition may exceed the softening point and melting point of the nitrile rubber.

In an embodiment, step (ii) comprises:
extruding the solvent-free composition at a temperature of from about 20 to about 300 °C, such as from about 50 to about 250 °C, for example from about 80 to about 200 °C, such as from about 120 to about 200 °C, such as from about 150 to about 200 °C to provide an extrudate.

Preferably, extruding at a temperature of from about 50 to about 250 °C. More preferably, extruding at a temperature of from about 80 to about 200 °C. Even more preferably, extruding at a temperature of from about 90 to about 200 °C.

In an embodiment, step (ii) comprises:
calendering the solvent-free composition to form an electroactive layer, for example by using a roll temperature of from about 50 to about 250 °C, for example from about 80 to about 200 °C, such as from about 120 to about 200 °C, such as from about 150 to about 200 °C.

In an embodiment, step (ii) comprises:
calendering the extrudate to form an electroactive layer, for example by using a roll temperature of from about 50 to about 250 °C, for example from about 80 to about 200 °C, such as from about 120 to about 200 °C, such as from about 150 to about 200 °C.

In the context of the disclosure, calendering of the solvent-free composition or extrudate refers to calendering onto a conductive foil to form an electroactive layer.

The roll temperature may be from about 20 to about 300 °C. Preferably, the roll temperature is from about 50 to about 250 °C. More preferably, the roll temperature is from about 80 to about 200 °C. Even more preferably, the roll temperature is from about 90 to about 200 °C.

The extruding step may be combined with the calendering step, so that the step of extruding the solvent-free composition to provide an extrudate is followed by the step of calendering the extrudate to form an electroactive layer.

Preferably, step (ii) comprises a calendering process, for example a roll-to-roll calendering process wherein the extrudate is rolled between two or more rollers.

Preferably, the solvent-free composition is extruded directly into the calender roller, for instance extruded directly into the nip between two calender rollers.

In an embodiment, the elevated temperature may be achieved by heating of preheating the conductive foil i.e. the solvent-free composition is heated on contact with the conductive foil.

The extrudate may also be heated on contact with the conductive foil.

In an embodiment, step (ii) comprises:
preheating the conductive foil.

For example, step (ii) comprises:
preheating the conductive foil to a temperature of from about 50 to about 300 °C, for example from about 80 to about 250 °C, such as from about 100 to about 200 °C.

Preferably, the electroactive layer of the disclosure has a thickness of from about 10 µm to about 1 mm, for example from about 50 to about 750 µm, such as from about 100 to about 500 µm.

Preferably, the electroactive layer has a uniform thickness. For example, the thickness variation of the electroactive layer may be about 10% or less, for example about 5% or less, such as about 2.5% or less, preferably about 1% or less.

By thickness variation, it should be understood to be the difference between the maximum thickness of the electroactive layer and the minimum thickness of the electroactive layer.

Preferably, the electroactive layer has a density of from about 0.8 to about 4.0 g/cm³, for example from about 1.0 to about 3.5 g/cm³, such as from about 1.2 to about 3.0 g/cm³, for example from about 1.4 to about 2.5 g/cm³.

Typically in wet methods, binders such as PVDF have been used in cathode slurries for lithium-ion batteries, since such compounds provide good flexibility. However, these binders contain fluorine, which may be harmful to the environment and to human health. Therefore, the replacement of a fluorine-based binder may result in a more environmentally friendly and safer cell.

An electrode prepared by the method of the present disclosure may also display good electrolyte penetration, which facilitates preparation of the cell. In particular, since the electrode comprises an electroactive layer wherein the binder (i.e. lithiated polymer) is not a fluorine-containing material, the electrode may display excellent electrolyte uptake properties.

Additionally, elimination of solvent or dispersing medium from the composition avoids the use of toxic and environmentally hazardous chemicals, and it can help to reduce electrode manufacturing costs associated with material resources, disposal of waste products, use of special production equipment, such as drying equipment, and time involved in electrode drying processes.

Dry processing also streamlines the electrode manufacturing method by removing time-consuming and expensive solvent removal steps. Furthermore, this allows other active materials that are sensitive to solvents, such as NMP-sensitive or water-sensitive active materials, to be used.

Additionally, dry preparation of the electroactive layer avoids any issues arising during solvent evaporation, for example microstructural defect formation in electroactive layer. Electrodes prepared using the methods disclosed herein exhibit excellent structural and electrochemical properties in lithium-ion cells.

The nitrile rubber improves the mechanical properties of the electroactive layer, for example it may improve the flexibility of the electrode and remove the need for additional binder additives.

A nitrile rubber in combination with a lithiated polymer facilitates manufacturing of the electroactive layer and improves the flexibility, stability and processability of the free-standing layer and/or electrode. An electrode comprising the electroactive layer of the disclosure may have excellent flexibility, allowing it to be rolled for incorporation into a cell, such as a cylindrical cell, prismatic cell, pouch cell, or coin cell.

The improved mechanical properties of the electroactive layer may improve the stability of an electrode during use. For example, electroactive layers that are brittle may be prone to fracture on prolonged cell use.

The nitrile rubber may also provide an electrode with good adhesion i.e., improved adhesion of the electroactive layer and the current collector.

Large volume changes of the electroactive layer during charging and discharging under cell operation may lead to electrode delamination if there is poor adhesion between the electroactive layer and the current collector. The use of a nitrile rubber in the composition may mitigate delamination of the electroactive layer and the conductive foil thereby improving cell cycle life.

The adhesion strength of the electroactive layer and the conductive foil may be measured using a peel test, for instance in accordance with ASTM D903. The peel strength nitrile rubber may be about 10 N/m or greater, such as from about 10 to about 150 N/m, for example from about 30 to about 140 N/m. In comparison, the peel strength of an electrode wherein the active layer does not comprise a lithiated polymer and a nitrile rubber may be from about 1 to 10 N/m.

### Cell

The composition of the present invention may be included in a cell. The cell may include at least a cathode, an anode and an electrolyte, wherein the cathode comprises the composition described herein. The cell may include a separator.

The cell may be a cylindrical, prismatic, coin cell or pouch cell.

The cell may be a lithium-ion cell, such as a secondary lithium-ion cell.

Preferably, the cell is a cylindrical secondary lithium-ion cell.

### Battery System

The cell may be included in a battery system. The battery system may include one or more individual cells. The cells may be configured in a series, parallel or a mixture thereof, in order to achieve the desired voltage, energy capacity and/or power density. The battery system may include battery modules, wherein the battery modules include one or more individual cells. The battery system may include interconnects which provide electrical conductivity between the cells. The battery system may further include cooling and heating systems. The battery system may also include software for managing the battery system, for example a battery management system (BMS).

### Vehicle

The battery system may be included in a vehicle. The vehicle may have an onboard power system that is integrated with the battery system. The battery system may also be included in a vehicle accessory, such as a trailer or roof-top box.

Unless otherwise indicated, all technical and scientific terms used herein have the same meaning as commonly understood by one of ordinary skill in the art to which this invention pertains.

All embodiments of the invention and particular features mentioned herein may be taken in isolation or in combination with any other embodiments and/or particular features mentioned herein (hence describing more particular embodiments and particular features as disclosed herein) without departing from the disclosure of the invention.

As used herein, the term 'comprises' will take its usual meaning in the art, namely indicating that the component includes but is not limited to the relevant features (i.e. including, among other things). As such, the term 'comprises' will include references to the component consisting essentially of the relevant substance(s).

Wherever the word 'about' is employed herein in the context of amounts, for example absolute amounts, weights, volumes, sizes, diameters etc., or relative amounts (e.g. percentages) of individual constituents in a composition or a component of a composition (including concentrations and ratios), timeframes, and parameters such as temperatures etc., it will be appreciated that such variables are approximate and as such may vary by ±10%, for example ±5% and preferably ±2% (e.g. ±1%) from the actual numbers specified herein. This is the case even if such numbers are presented as percentages in the first place (for example 'about 10%' may mean ±10% about the number 10, which is anything between 9% and 11%).'

## Claims

**1.** A method of forming a cathode, the cathode comprising a conductive foil and an electroactive layer, the method comprising:
(i) providing a solvent-free composition comprising
a cathode active material;
a lithiated polymer;
a nitrile rubber; and
optionally a conductive additive; and
(ii) extruding the solvent-free composition at a temperature of from about 50 to about 250 °C to provide an extrudate, and calendering the extrudate on the conductive foil to form an electroactive layer.

**2.** The method of claim 1 wherein the temperature of the solvent-free composition and/or extrudate is between 20 to about 300 °C, such as from about 50 to about 250 °C, for example from about 80 to about 200 °C, such as from about 120 to about 200 °C, such as from about 150 to about 200 °C in at least one of step (i) and the calendering of step (ii), and/or from about 80 to about 200 °C, such as from about 120 to about 200 °C, such as from about 150 to about 200 °C in the extruding of step (ii).

**3.** The method of claim 1 or claim 2, wherein the nitrile rubber is present in an amount of from about 1 to about 5 wt%, based on the total weight of the composition.

**4.** The method of any preceding claims, wherein the nitrile rubber is selected from one or more of nitrile butadiene rubber (NBR), nitrile butadiene latex, hydrogenated nitrile butadiene rubber (HNBR), or mixtures thereof.

**5.** The method of any preceding claims, wherein the lithiated polymer is lithium polyacrylate.

**6.** The method of any preceding claims, wherein the cathode active material comprises a lithium nickel manganese oxide or a lithium nickel manganese cobalt oxide.

**8.** The method of any preceding claims, wherein the solvent-free composition comprises:
92-99 wt% cathode active material;
0.01-3 wt% lithiated polymer;
0.05-7 wt% nitrile rubber; and
optionally 0.05-5 wt% conductive additive.

**9.** The method of any preceding claims wherein the D[4,3] particle sizes for the cathode active material and the lithiated polymer is from 5:1 to 1:5, preferably from 3:1 to 1:3, more preferably from 2:1 to 1:2.

**10.** A solvent-free composition comprising;
92-99 wt% cathode active material;
0.01-3 wt% lithiated polymer;
0.05-7 wt% nitrile rubber; and
optionally 0.05-5 wt% conductive additive;
wherein,
the D[4,3] particle sizes for the cathode active material and the lithiated polymer are from 5:1 to 1:5, preferably from 3:1 to 1:3, more preferably from 2:1 to 1:2.

**11.** A method for preparing the solvent-free composition of claim 10 or as used in the method of any of claims 1-9; the method comprising the steps of:
a. providing a combination of a cathode active material, a lithiated polymer, nitrile rubber, and optional conductive additive; and
b. mixing the combination under a shear force to obtain the solvent-free composition.

**12.** A cathode formed from the method of any one of claims 1-9 or comprising the solvent-free composition of claim 10.

**13.** A cell comprising:
the cathode of claim 12;
an anode;
a separator; and
an electrolyte; wherein
preferably the cell is a lithium-ion cell, even more preferable wherein the cell is a secondary lithium-ion cell.

**14.** A battery system comprising the cell according to Claim 13.

**15.** A vehicle comprising the battery system according to Claim 14.
